# EUROPÄISCHE PATENTSCHRIFT

(11) **EP 0 454 015 B1**
(45) Veröffentlichungstag und Bekanntmachung des Hinweises auf die Patenterteilung: **07.09.1994**
(21) Anmeldenummer: 91106415.2
(22) Anmeldetag: 22.04.1991
(51) Int. Cl.: H01M 10/39

(54) **Hochtemperaturspeicherbatterie**
High-temperature accumulator battery
Batterie d'accumulateurs à haute température

(30) Priorität: 26.04.1990 DE 4013268
(43) Veröffentlichungstag der Anmeldung: 30.10.1991
(73) Patentinhaber: ABB PATENT GmbH, 68309 Mannheim (DE)
(72) Erfinder: Andres, Walter, W-6700 Ludwigshafen 23 (DE); Flory, Wilfried, W-6835 Brühl (DE); Mennicke, Stefan, Dr., W-6906 Leimen-Gauangelloch (DE)
(74) Vertreter: Rupprecht, Klaus, Dipl.-Ing.

(56) Entgegenhaltungen:
- EP-A- 0 064 738
- US-A- 2 485 397
- US-A- 3 784 411

## Beschreibung

Die Erfindung bezieht sich auf eine Kochtemperaturspeicherbatterie gemäß dem Oberbegriff des Patentanspruches 1.

Solche Hochtemperaturspeicherbatterien, die aus elektrochemischen Speicherzellen auf der Basis von Alkalimetall und Chalkogen aufgebaut sind, werden in vermehrtem Maße als Energiequelle für die Elektroantriebe von Fahrzeugen eingesetzt. Die bis jetzt bekannten Kochtemperaturspeicherbatterien mit elektrochemischen Speicherzellen der oben genannten Bauart arbeiten bei einer Temperatur zwischen 300°C bis 350°C. Um Wärmeverluste, insbesondere in den Ruhepausen der Hochtemperaturspeicherbatterien zu vermeiden, sind diese von einer thermischen Isolierung umgeben. Diese wird durch ein doppelwandiges Gehäuse begrenzt, wobei der Innenraum zwischen den Wänden evakuiert und mit einem Isoliermaterial ausgefüllt ist. Der Innenraum der Isolierung dient zur Aufnahme der Speicherzellen. Um sicherzustellen, daß die Speicherzellen dauerhaft in der beim Einbau zugeordneten Position verbleiben, sind Halterungen vorgesehen. Es handelt sich hierbei um Metallkonstruktionen. Bei der Verwendung dieser Bauelemente müssen Kompromisse eingegangen werden zwischen der Steifigkeit der Konstruktion einerseits und dem Volumen und dem Gewicht derselben andererseits. Da aber die Energiedichte bezogen auf die Masse und das Volumen eine wichtige Kerngröße der Hochtemperaturspeicherbatterie ist, müssen gewöhnlich die Forderungen an die Bruchfestigkeit, die Stabilität unter Einwirkung von Zug- und Druckkräften auf die Halterungen reduziert werden. Den bekannten Halterungen fehlt zudem die erforderliche Isolation, die verhindert, daß das Potential beispielsweise einer defekten Speicherzelle der gesamten Halterung aufgeprägt wird.

Aus der US-A-3,784,411 ist eine Batterie bekannt, die durch elektrische Zellen gebildet wird. Mehrere solcher Zellen sind zu einem Stapel aufeinander gesetzt. Sie werden durch eine gitterförmige Abstandhalterung aus Polypropylenfilamenten zusammengehalten. Mehrere solcher Stapel sind in parallel zueinander verlaufenden Reihen angeordnet. Diese Reihen und Stapel von Zellen werden zusätzlich von einem Epoxid umschlossen.

In der US-A-2,485,397 ist eine Batterie beschrieben, die aus Trockenzellen aufgebaut ist. Die Zellen sind bereichsweise von einem abdichtenden Material umschlossen. Dieses Material ist bei Normaltemperatur plastisch.

Der Erfindung liegt die Aufgabe zugrunde, eine Hochtemperaturspeicherbatterie aufzuzeigen, bei der die eingangs aufgezeigten Nachteile unterbunden werden.

Diese Aufgabe wird erfindungsgemäß durch die Merkmale des Patentanspruches 1 gelöst.

Die zur Herstellung der Halterung verwendeten Werkstoffe sind korrosionsbeständig gegenüber Natrium, Schwefel und Natriumpolysulfid. Die Halterung weist beim Zusammenbau der Hochtemperaturspeicherbatterie und während des Betriebs derselben einen spezifischen elektrischen Widerstand auf, der größer ist als 10⁸ Ohm x cm. Dieses ist erforderlich, da Speicherzellen, deren Reaktanden durch eine Festelektrolyten getrennt sind, im kalten, verschalteten Zustand empfindlich gegen Strombelastungen sind. Durch das Gemisch aus einem grobkörnigen Werkstoff mit einem organischen oder anorganischen Bindemittel bzw. durch das Benetzen eines grobkörnigen Werkstoffs mit einem solchen Bindemittel wird ein Ausgangsmaterial geschaffen, mit dem eine Halterung für Speicherzellen hergestellt werden kann, die allen im Betriebszustand der Hochtemperaturspeicherbatterie auftretenden Kräfte Stand halten kann. Die Speicherzellen sind in die Halterung eingebettet, und werden von dieser eng und dauerhaft umschlossen. Das ausgehärtete Bindemittel umgibt nicht nur den grobkörnigen Werkstoff, sondern auch die Speicherzellen unmittelbar, so daß ein Losrütteln der Speicherzellen nach dem Aushärten des Bindemittels nicht mehr möglich ist. Als grobkörniger Werkstoff werden vorzugsweise Korund, Hohlkugelkorund, Quarzsand, Mullit, Glaskugeln, oder Glashohlkugeln verwendet. Werkstoffe, die diesen Materialien ähnlich sind, können ebenfalls als Füllermaterial verwendet werden. Das gleiche gilt für elektrisch nichtleitende Oxide von Elementen aus den Gruppen II, III, IV, IIIb und IVb des chemischen Periodensystems. Mischungen und Verbindungen dieser Oxide kommen ebenfalls als Füllermaterial in Frage. Die Verwendung einer Mischung aus den erstgenannten Materialen und den Oxiden ist ebenfalls möglich. Die Teilchengröße des als Füllermaterial dienenden Werkstoffs wird so gewählt, daß der mittlere Durchmesser zwischen 20 und 1000µm liegt. Es handelt sich hierbei um Materialien, die bei Zimmertemperatur rieselfähig sind. Als Bindemittel werden bevorzugt duroplastische Harze in Form von Silikonharz oder Phenolharz bzw. eine Mischung hiervon verwendet. Spezielle Gläser können ebenfalls als Bindemittel genutzt werden. Die duroplastischen Harze und die Gläser können als Granulate hergestellt werden. Sie sind bei Zimmertemperatur ebenfalls rieselfähig. Sowohl die Füllermaterialien als auch die Bindemittel lassen sich auf Grund ihrer Rieselfähigkeit problemlos um die Speicherzellen und in den Hohlräumen zwischen den Speicherzellen anordnen. Die Rieselfähigkeit kann durch Granulierung des Gemisches oder durch die Beschichtung des grobkörnigen Werkstoffs mit dem Harz verbessert werden. Die als Bindemittel verwendeten Werkstoffe weisen den Vorteil auf, daß sie beim Aushärten im Gemisch mit den erwähnten Füllermaterialien nur geringen Schwund zeigen. Die Gasentwicklung aus den Materialien ist beim Aufheizen der Kochtemperaturspeicherbatterie auf deren Betriebstemperatur so gering, daß das Gas problemlos aus dem gebildeten Speicherzellenblock ausdiffundieren kann. Hierdurch ist es möglich, eine Hochtemperaturspeicherbatterie mit guten gewichtsbezogenen und elektrischen Daten zu realisieren. Die Bindemittel sind so gewählt, daß sie bei der Inbetriebnahme der Hochtemperaturspeicherbatterie zu schmelzen beginnen und den als Füllermaterial dienenden grobkörnigen Werkstoff benetzen. Bei der Verwendung von Glas als Bindemittel werden solche grobkörnigen Werkstoffe verwendet, aus denen sich solche Bestandteile lösen, die das Auskristallisieren des Glases unterstützten. Bei der Verwendung von Harz als Bindemittel kommt es nach dem Schmelzen desselben zu einer Vernetzung des Polymers, das anschließend aushärtet. Sowohl bei der Verwendung von Glas als auch der Verwendung eines duroplastischen Harzes entsteht ein Block aus einer betonartigen Masse, in welche die Speicherzellen und die Schaltelemente so eingebettet sind, daß ein Speicherzellenblock gebildet wird, der den Innenbereich des Batteriekastens vollständig ausfüllt.

Die Erfindung wird nachfolgend anhand von schematischen Zeichnungen näher erläutert. Es zeigen:
- Fig. 1: eine Hochtemperaturspeicherbatterie,
- Fig. 2: einen Speicherzellenblock, wie er in die Hochtemperaturspeicherbatterie gemäß Fig. 1 eingesetzt ist.

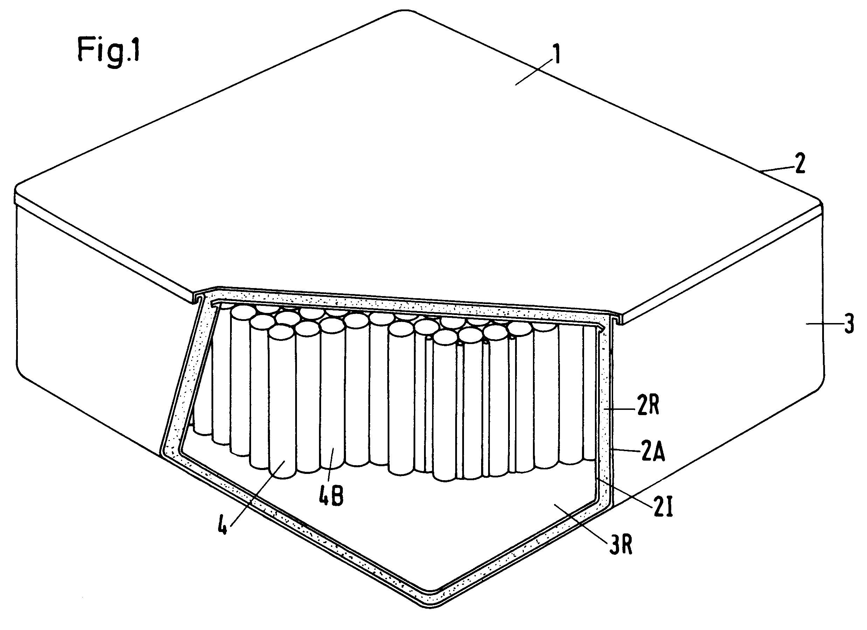

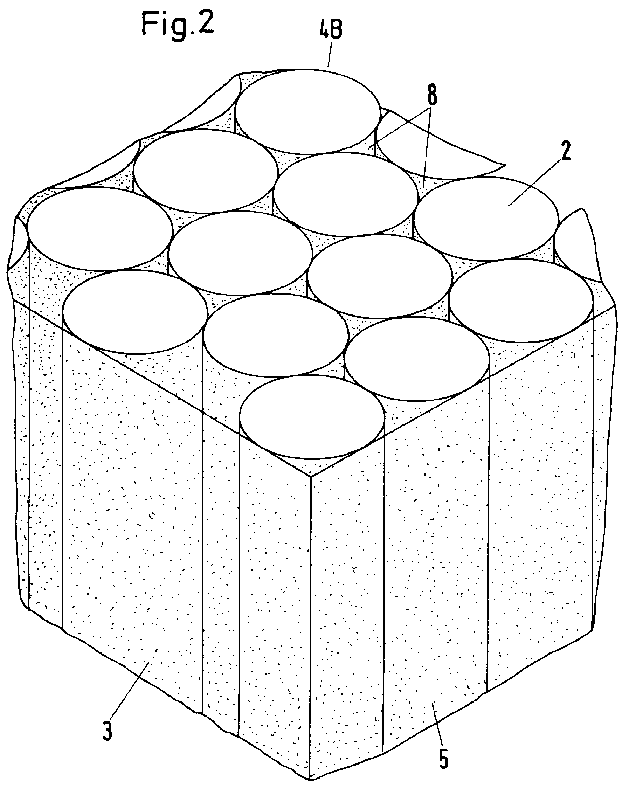

Fig. 1 zeigt eine Hochtemperaturspeicherbatterie 1, die von einer Isolierung 3 begrenzt wird, die in ihrem Innenraum 3R eine Vielzahl von Speicherzellen 4 aufweist, welche elektrisch miteinander verschaltet sind. Die thermische Isolierung 3 wird durch ein doppelwandiges Gehäuse 2 gebildet. Zwischen dessen innerer und äußerer Wand 2A bzw. 2I ist ein Raum 2R vorgesehen, der mit Isoliermaterial 10 ausgefüllt und zusätzlich evakuiert ist. Die Speicherzellen 4 sind zu einem Speicherzellenblock bzw. einer Zellmatrix 4B zusammengefaßt. Beim Zusammenbau der Hochtemperaturspeicherbatterie 1 werden die Speicherzellen 4 so angeordnet, daß ihre Längsachsen zueinander und zu einer vertikalen Ebene parallel verlaufen. Damit die Speicherzellen 4 auch bei extremen Krafteinwirkungen von außen in dieser Position gehalten werden, sind sie, wie Fig. 2 zeigt, durch eine Halterung 5 dauerhaft zu dem oben erwähnten Speicherzellenblock 4B zusammengefügt. Diese Halterung 5 wird durch einen als Füllermaterial dienenden grobkörnigen Werkstoff gebildet, der mit einem duroplastischen Harz bzw. einem Glas gemischt bzw. von diesem überzogen ist. Beim Zusammenbau der Hochtemperaturspeicherbatterie 1 wird dieser grobkörnige Werkstoff und das duroplastische Harz 7 bzw. ein entsprechendes Glas um die Speicherzellen 4 herum und in den Zwischenräumen 8 zwischen den Speicherzellen 4 so angeordnet, daß alle Speicherzellen 4 rundum in dieses Material eingebettet sind. Bei dem großkörnigen Werkstoff handelt es sich um Korund, Hohlkugelkorund, Quarzsand, Mullit, Glaskugeln, Glashohlkugeln oder chemisch ähnliche Werkstoffe. Die Verwendung von elektrisch nichtleitenden Oxiden von Elementen der Gruppen II, III, IV, IIIb und IVB des chemischen Periodensystems bzw. Gemische dieser Oxide oder nichtleitende Verbindungen hiervon können ebenfalls als grobkörniges Material genutzt werden. Das gleiche gilt für Gemische aus dem erstgenannten Material und solchen Oxiden und ihren Verbindungen. Der Anteil des grobkörnigen Werkstoffs beträgt 70-99%. Dieses als Füller dienende grobkörnige Material 6 weist einen mittleren Durchmesser von 20 bis 1000µm auf. Der übrige Anteil des um die Speicherzellen 4 und in den Zwischenräumen 8 angeordneten Materials wird vorzugsweise durch ein Silikonharz oder ein Phenolharz bzw. einem Gemisch hiervon gebildet. Das Harz kann zusammen mit dem grobkörnigen Material in Form von Granulaten um die Speicherzellen 4 und in den Zwischenräumen 8 angeordnet werden. Es besteht auch die Möglichkeit, das grobkörnige Material mit dem Harz zu überziehen. Bei der Inbetriebnahme der Batterie, insbesondere beim ersten Aufheizen derselben beginnt das Harz zu schmelzen und benetzt das Füllermaterial. Bei einer weiteren Erhöhung der Temperatur vernetzt das Harz und härtet aus. Es bleibt bei einer Betriebstemperatur von 300 bis 350°C in diesem ausgehärteten Zustand. Um die Festigkeit des Harzes zu erhöhen, oder um auch bei einer Erhöhung der Temperatur auf Werte weit über 350°C sicherzustellen, daß dieser ausgehärtete Zustand des Harzes erhalten bleibt, wird dem grobkörnigen Werkstoff und dem Harz ein Zusatz an 0,5 bis 5% Borat, Silikat oder Phosphat eines Alkalimetalls beigemischt. Hierdurch wird sichergestellt, daß der verfestigte Zustand des Harzes erhöht oder bei einer ungewollten Temperaturerhöhung auf Werte über 350 °C beibehalten bleibt, so daß die Speicherzellen 4 auch während oder nach einer solchen Betriebsstörung fest im Verbund des Speicherzellenblocks 4B gehalten werden. Bei einer bevorzugten Ausführungsform wird die Halterung 5 durch 70% Quarzsand mit einer mittleren Teilchengröße von 300 µm, 24% Mikroglaskugeln mit einem mittleren Durchmesser von 50 µm, sowie 5% Silikonharz und 1% Natriumpyrophosphat gebildet. Ein ebenso guter Zusammenhalt des Speicherzellenblocks 4B kann durch die Verwendung von 88 bis 90% Quarzsand mit der obenangegebenen Teilchengröße, 1 bis 12% Silikonharz und 0,5 bis 5% Natriumpyrophosphat erzielt werden. Das gleiche gilt, wenn als Füllermaterial eine Mischung aus Quarzsand und Aluminiumoxid verwendet wird. Erfindungsgemäß besteht die Möglichkeit, das Harz durch ein Glas zu ersetzen. Es wird hierfür ein Glas gewählt, das bei 350°C oder darunter glasiert und das durch den Einfluß von Bestandteilen, die sich aus dem Füllermaterial lösen, auskristallisiert. Es können auch Gläser verwendet werden, deren Erweichungspunkt unteralb von 350°C liegt, und der durch Bestandteile, die sich aus dem Füllermaterial lösen, erhöht wird. In beiden Fällen sind die Füllermateialien so zu wählen, daß sie hierfür geeignete und sich lösende Bestandteile enthalten. Die oben beschriebene Halterung 5, hergestellt aus einem grobkörnigen Werktoff, einem Bindemittel und gegebenenfalls einem Zusatz zur Erhöhung der Festigkeit, ist nicht nur geeignet Speicherzellen auf der Basis von Natrium und Schwefel zusammenzuhalten. Vielmehr kann das oben beschriebene Material auch für den Zusammenhalt von Speicherzellen auf der Basis von NaFeCl₂ oder NaNiCl₂ Verwendung finden.

## Patentansprüche

1. Hochtemperaturspeicherbatterie mit einer thermischen Isolierung (3), in deren Innenraum (3R) die miteinander verschalteten Speicherzellen (4) angeordnet und über eine aus einem elektrisch nicht leitenden Werkstoff gefertigte Halterung (5) zumindest zu einem Speicherzellenblock (4B) zusammengefaßt sind, dadurch gekennzeichnet, daß die Halterung (5) aus einem als Füllermaterial dienenden grobkörnigen Werkstoff und mindestens einem anorganischen oder organischen Bindemittel sowie gegebenenfalls aus einem die Festigkeit fördernden Zusatz gebildet ist, und daß die Halterung (5) während der Herstellung und während des Betriebs der Speicherzelle (4) wenigstens einen spezifischen elektrischen Widerstand von 10⁴ Ohm x cm aufweist und die Speicherzellen (4) dauerhaft in der bei der Montage festgelegten Position hält.

2. Hochtemperaturspeicherbatterie nach Anspruch 1, dadurch gekennzeichnet, daß das Füllermaterial mit dem Bindemittel vermischt oder mit diesem beschichtet ist.

3. Hochtemperaturspeicherbatterie nach einem der Ansprüche 1 oder 2, dadurch gekennzeichnet, daß als grobkörniger Werkstoff Korund, Hohlkugelkorund, Quarzsand, Mullit, Glaskugeln oder Glashohlkugeln vorgesehen ist.

4. Hochtemperaturspeicherbatterie nach einem der Ansprüche 1 bis 3, dadurch gekennzeichnet, daß als grobkörniges Füllermaterial elektrisch nicht leitende Oxide von Elementen der Gruppen II, III, IV, IIIb, IVb des chemischen Periodensystems oder Mischungen bzw. Verbindungen dieser Oxide vorgesehen sind.

5. Hochtemperaturspeicherbatterie nach einem der Ansprüche 1 bis 4, dadurch gekennzeichnet, daß als Bindemittel ein duroplastisches Harz in Form von Silikonharz oder Phenolharz oder eine Mischung aus beiden vorgesehen ist.

6. Hochtemperaturspeicherbatterie nach einem der Ansprüche 1 bis 5, dadurch gekennzeichnet, daß als Bindemittel ein unterhalb oder bei 300°C glasierendes Glas vorgesehen ist, das mittels gelöster Bestandteile aus dem Füllermaterial auskristallisiert.

7. Hochtemperaturspeicherbatterie nach einem der Ansprüche 1 bis 5, dadurch gekennzeichnet, daß als Bindemittel ein Glas verwendet wird, dessen Erweichungspunkt unterhalb von 350°C liegt, und der durch Lösen von Bestandteilen aus dem grobkörnigen Werkstoff auf eine Temperatur über 350°C anhebbar ist.

8. Hochtemperaturspeicherbatterie nach einem der Ansprüche 1 bis 7, dadurch gekennzeichnet, daß die Halterung (5) aus 70% Quarzsand mit einer mittleren Teilchengröße von 300 µm, 24% Mikroglaskugeln mit einer mittleren Teilchengröße von 50 µm sowie einem Anteil von 6% Silikonharz gefertigt ist.

9. Hochtemperaturspeicherbatterie nach Anspruch 8, dadurch gekennzeichnet, daß dem Quarzsand, den Mikroglaskugeln und dem Silikonharz 0,5 bis 5% Borat, Silikat oder Phosphat eines Alkalimetalls als Zusatz beigemischt sind.

10. Hochtemperaturspeicherbatterie nach einem der Ansprüche 1 bis 7, dadurch gekennzeichnet, daß die Halterung aus 88 bis 99% Quarzsand, 1 bis 12% Silikonharz und 0,5 bis 5% Natriumpyrophosphat hergestellt ist.

## Claims

1. High-temperature storage battery having a thermal insulation (3), in the inner space (3R) of which the interconnected storage cells (4) are arranged and combined by means of a retainer (5), produced from an electrically non-conductive material, at least into one storage cell block (4B), characterized in that the retainer (5) is formed from a coarse-grained material, serving as filler material, and at least one inorganic or organic binder as well as, if appropriate, from an additive improving the strength, and in that the retainer (5) has during production and during operation of the storage cell (4) at least an electrical resistivity of 10⁴ ohms x cm, and holds the storage cells (4) permanently in the position fixed during assembly.

2. High-temperature storage battery according to Claim 1, characterized in that the filler material is mixed with the binder or coated by it.

3. High-temperature storage battery according to either of Claims 1 or 2, characterized in that corundum, hollow-bead corundum, quartz sand, mullite, glass beads or hollow glass beads are provided as coarse-grained material.

4. High-temperature storage battery according to one of Claims 1 to 3, characterized in that electrically non-conductive oxides of elements of groups II, III, IV, IIIb, IVb of the chemical periodic system or mixtures or compounds of these oxides are provided as coarse-grained filler material.

5. High-temperature storage battery according to one of Claims 1 to 4, characterized in that a thermoset resin in the form of silicone resin or phenolic resin or a mixture of the two is provided as binder.

6. High-temperature storage battery according to one of Claims 1 to 5, characterized in that a glass vitrifying below or at 300°C, which crystallizes by means of released constituents from the filler material is provided as binder.

7. High-temperature storage battery according to one of Claims 1 to 5, characterized in that a glass of which the softening point lies below 350°C and which can be raised to a temperature above 350°C by releasing constituents from the coarse-grained material is used as binder.

8. High-temperature storage battery according to one of Claims 1 to 7, characterized in that the retainer (5) is made from 70% quartz sand having an average particle size of 300 µm, 24% microglass beads having an average particle size of 50 µm and a proportion of 6% silicone resin.

9. High-temperature storage battery according to Claim 8, characterized in that 0.5 to 5% borate, silicate or phosphate of an alkali metal are mixed in as an additive with the quartz sand, the microglass beads and the silicone resin.

10. High-temperature storage battery according to one of Claims 1 to 7, characterized in that the retainer is produced from 88 to 99% quartz sand, 1 to 12% silicone resin and 0.5 to 5% sodium pyrophosphate.

## Revendications

1. Batterie d'accumulateur à haute température comportant une isolation thermique (3) dans l'espace intérieur (3R) de laquelle les éléments accumulateurs (4) interconnectés sont disposés et sont réunis en au moins un bloc d'éléments accumulateurs (4B) en passant par un moyen de maintien (5)réalisé en un matériau électriquement non conducteur, caractérisé par le fait que le moyen de maintien (5) est formé par un matériau à gros grains servant de matériau de remplissage ou charge et par au moins un liant minéral ou organique ainsi que le cas échéant par un additif favorisant la solidité et que le moyen de maintien (5) présente pendant la fabrication et pendant le fonctionnement de l'élément accumulateur (4) au moins une résistivité électrique de 10⁴ Ohm x cm et maintient les éléments accumulateurs (4) de façon permanente dans la position déterminée lors du montage.

2. Batterie d'accumulateur à haute température suivant la revendication 1, caractérisée par le fait que le matériau de remplissage est mélangé avec ou est recouvert par le liant.

3. Batterie d'accumulateur à haute température suivant l'une des revendications 1 ou 2, caractérisée par le fait que le matériau à gros grains est constitué par du corindon, du corindon en billes creuses, du sable quartzeux, de la mullite, des billes de verre ou des billes de verre creuses.

4. Batterie d'accumulateur à haute température suivant l'une des revendications 1 à 3, caractérisée par le fait que le matériau de remplissage à gros grains est constitué par des oxydes électriquement non conducteurs d'éléments des groupes II , III, IV, IIIb, IVb du système périodique des éléments ou par des mélanges ou composés de ces oxydes.

5. Batterie d'accumulateur à haute température suivant l'une des revendications 1 à 4, caractérisée par le fait que le liant est une résine thermodurcissable sous forme de résine de silicone ou de résine phénolique ou un mélange des deux.

6. Batterie d'accumulateur à haute température suivant l'une des revendications 1 à 5, caractérisée par le fait que le liant est un verre vitrifiant en dessous de ou à 300°C, cristallisant sous l'action de constituants dissous provenant du matériau de remplissage.

7. Batterie d'accumulateur à haute température suivant l'une des revendications 1 à 5, caractérisée par le fait que le liant est un verre dont le point de ramollissement est inférieur à 350°C et peut être élevé à une température supérieure à 350°C par dissolution de constituants du matériau à gros grains.

8. Batterie d'accumulateur à haute température suivant l'une des revendications 1 à 7, caractérisée par le fait que le moyen de maintien (5) est fabriqué à partir de 70% de sable quartzeux avec une grosseur moyenne des particules de 300 µm, de 24% de microbilles de verre avec une grosseur moyenne des particules de 50 µm, ainsi que de 6% de résine de silicone.

9. Batterie d'accumulateur à haute température suivant la revendication 8, caractérisée par le fait que qu'on ajoute comme additif au sable quartzeux, aux microbilles de verre et à la résine de silicone, de 0,5 à 5% de borate, silicate ou phosphate d'un métal alcalin.

10. Batterie d'accumulateur à haute température suivant l'une des revendications 1 à 7, caractérisée par le fait qu'on réalise le moyen de support à partir de 88 à 99% de sable quartzeux, 1 à 12% de résine de silicone et 0,5 à 5% de pyrophosphate de sodium.
